# EUROPEAN PATENT SPECIFICATION

(11) **EP 4 250 804 B1**
(45) Date of publication and mention of the grant of the patent: **03.06.2026**
(21) Application number: 23160923.1
(22) Date of filing: 09.03.2023
(51) Int. Cl.: H04W 24/02, H04W 28/086, H04W 24/04, H04W 48/18, G06N 3/044, G06N 3/08, H04W 28/08, H04W 88/06, G06N 3/02

(54) **USER EQUIPMENT WITH ACCESS PERFORMANCE PREDICTION AND ASSOCIATED WIRELESS COMMUNICATION METHOD**
BENUTZERGERÄT MIT ZUGRIFFSLEISTUNGSVORHERSAGE UND ZUGEHÖRIGES DRAHTLOSKOMMUNIKATIONSVERFAHREN
ÉQUIPEMENT UTILISATEUR AVEC PRÉDICTION DE PERFORMANCE D'ACCÈS ET PROCÉDÉ DE COMMUNICATION SANS FIL ASSOCIÉ

(30) Priority: 21.03.2022 US 202263321864 P; 14.02.2023 US 202318109265
(43) Date of publication of application: 27.09.2023
(73) Proprietor: MediaTek Inc., Hsin-Chu 300 (TW)
(72) Inventor: CHEN, Chi-Hsien, 30078 Hsinchu City (TW)
(74) Representative: Hoefer & Partner Patentanwälte mbB

(56) References cited:
- WO-A1-2021/155090
- US-A1- 2021 092 664
- "3rd Generation Partnership Project; Technical Specification Group Services and System Aspects; Study on enablers for network automation for the 5G System (5GS); Phase 2 (Release 17)", vol. SA WG2, no. V17.0.0, 17 December 2020 (2020-12-17), pages 1 - 382, XP051999941, Retrieved from the Internet <URL:https://ftp.3gpp.org/Specs/latest/Rel-17/23_series/23700-91-h00.zip 23700-91-h00.docx> [retrieved on 20201217]
- ERICSSON: "KI#21, sol#77 - Update to clarify the added measurement", vol. SA WG2, no. e-meeting; 20201116 - 20201120, 9 November 2020 (2020-11-09), XP051952502, Retrieved from the Internet <URL:https://ftp.3gpp.org/tsg_sa/WG2_Arch/TSGS2_142e_Electronic/Docs/S2-2008446.zip S2-2008446_eNA_Ph2_KI#21 sol#77 - Update to explain the added measurement.doc> [retrieved on 20201109]

## Description

### Cross Reference to Related Applications

This application claims the benefit of U.S. Provisional Application No. 63/321,864, filed on March 21st, 2022.

### Technical field

The present invention relates to wireless communications, and more particularly, to a user equipment (UE) with access performance prediction and an associated wireless communication method.

### Background

Access traffic steering, switching and splitting (ATSSS) is standardized for enabling traffic steering across multiple accesses, including a 3^{rd} generation partnership project (3GPP) access (e.g., fifth generation (5G) cellular network) and a non-3GPP access (e.g., WiFi network). Specifically, an ATSSS capable UE can use the ATSSS functionality to steer, switch and split the traffic across the 3GPP access and the non-3GPP access. Steering on the 3GPP access and the non-3GPP access can select one of the 3GPP access and the non-3GPP access for best access network selection. Switching on the 3GPP access and the non-3GPP access can switch the 3GPP access to/from the non-3GPP access network for seamless handover. The splitting on the 3GPP access and the non-3GPP access can select both of the 3GPP access and the non-3GPP access for access network aggregation.

The ATSSS capable UE can perform access performance measurements to decide how to distribute traffic over 3GPP access and non-3GPP access. In addition, the performance measurement function (PMF) needs to report measurement result (availability and round-trip time) to the network, and then the network may make decision to change the steering mode via ATSSS rules. It is hard for the ATSSS capable UE to take action (e.g., steer, switch, split) properly according to the measurement result since the 3GPP and non-3GPP access network environments change rapidly. Consequently, the end-user experience will be downgraded since the ATSSS capable UE (e.g., mobile phone) spends more response time to take proper action. WO 2021/155090 A1 discloses traffic steering enhancements for cellular networks. "3rd Generation Partnership Project; Technical Specification Group Services and System Aspects; Study on enablers for network automation for the 5G System (5GS); Phase 2 (Release 17)" discloses NWDAF assisted Per Access Network Performance.

### Summary

One of the objectives of the claimed invention is to provide a user equipment with access performance prediction and an associated wireless communication method. A user equipment and a wireless communication method according to the invention are defined in the independent claims. The dependent claims define preferred embodiments thereof.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating a user equipment (UE) according to an embodiment of the present invention.
FIG. 2 is a diagram illustrating a machine-learning assisted access performance prediction circuit according to an embodiment of the present invention.
FIG. 3 is a first sequence diagram illustrating interactions between UE and network (NW) shown in FIG. 1 according to an embodiment of the present invention.
FIG. 4 is a second sequence diagram illustrating interactions between UE and NW shown in FIG. 1 according to an embodiment of the present invention.
FIG. 5 is a third sequence diagram illustrating interactions between UE and NW shown in FIG. 1 according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

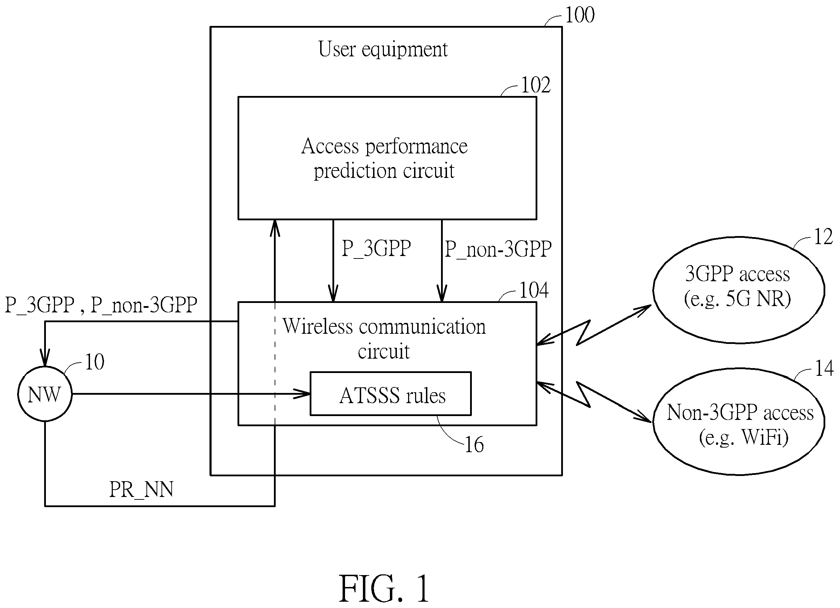

FIG. 1 is a diagram illustrating a user equipment (UE) according to an embodiment of the present invention. By way of example, but not limitation, the UE 100 may be a 5G system (5GS) ATSSS capable UE. As shown in FIG. 1, the UE 100 includes an access performance prediction circuit 102 and a wireless communication circuit 104. It should be noted that only the components pertinent to the present invention are shown in FIG. 1. In practice, the UE 100 is allowed to have other components to achieve other designated functions. The access performance prediction circuit 102 is arranged to predict performance of a 3rd generation partnership project (3GPP) access (e.g., 5G New Radio) 12 and performance of a non-3GPP access (e.g., WiFi) 14. The access performance prediction circuit 102 may be implemented by pure hardware, or a processor that loads and executes program codes, or a combination thereof. That is, the proposed UE-side access performance prediction may be achieved through hardware-based means, software-based means, or a combination thereof. The wireless communication circuit 104 includes components needed to deal with traffic steering across multiple accesses, including the 3GPP access 12 and the non-3GPP access 14, under a steering mode of ATSSS. A network (NW) 10 (e.g., 5G core network) may configure ATSSS rules 16 and push them to the UE 100. If a condition of the UE 100 fulfills one of the ATSSS rules 16, the UE 100 (particularly, wireless communication circuit 104 of UE 100) may take action (e.g., steer, switch, split) under a steering mode of ATSSS, where the steering mode may be an Active-Standby mode, a Smallest Delay mode, a load-Balancing mode, or a Priority-based mode.

In this embodiment, the traffic steering at the UE 100 depends on the predicted performance P_3GGP of the 3GPP access 12 and the predicted performance P_non-3GPP of the non-3GPP access 14. It should be noted that the predicted performance P_3GGP is a prediction result of a future network environment (i.e., a predicted measurement result) of the 3GPP access 12, rather than a measurement result of a current network environment of the 3GPP access 12; and the predicted performance P_non-3GGP is a prediction result of a future network environment (i.e., a predicted measurement result) of the non-3GPP access 14, rather than a measurement result of a current network environment of the non-3GPP access 14. The network environments of the 3GPP access 12 and the non-3GPP access 14 change rapidly. Since the traffic steering at the UE 100 is determined on the basis of the predicted performance P_3GGP of the 3GPP access 12 and the predicted performance P_non-3GPP of the non-3GPP access 14 (i.e., knowledge of future measurement results of the 3GPP access 12 and the non-3GPP access 14 provided by the proposed access performance prediction), the UE 100 (particularly, wireless communication circuit 104 of UE 100) can take action (e.g., steer, switch, split) in advance, thereby improving the end-user experience greatly.

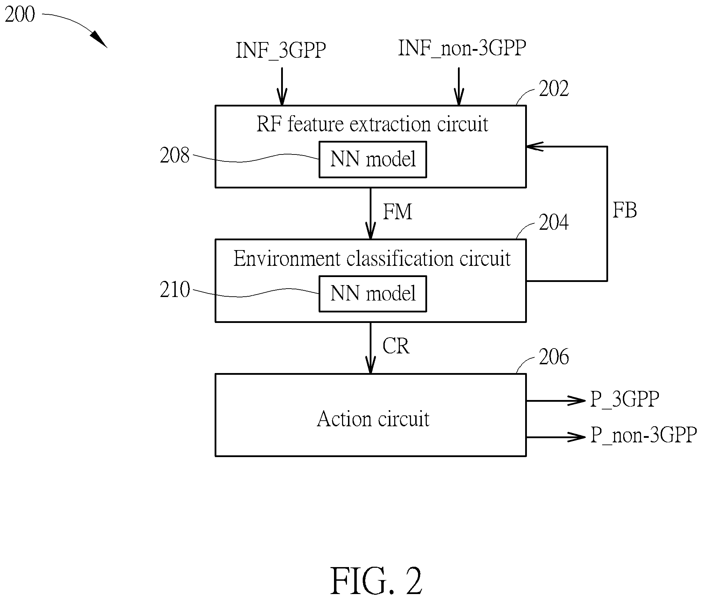

Preferably, the proposed access performance prediction may be achieved through machine learning. That is, the access performance prediction circuit 102 is arranged to obtain the predicted performance P_3GPP of the 3GPP access 12 and the predicted performance P_non-3GPP of the non-3GPP access 104 through machine learning. FIG. 2 is a diagram illustrating a machine-learning assisted access performance prediction circuit according to an embodiment of the present invention. The access performance prediction circuit 102 shown in FIG. 1 may be implemented by the machine-learning assisted access performance prediction circuit 200 shown in FIG. 2. In this embodiment, the machine-learning assisted access performance prediction circuit 200 includes a radio-frequency (RF) feature extraction circuit 202, an environment classification circuit 204, and an action circuit 206. The RF feature extraction circuit 202 is arranged to receive RF signal information INF_3GPP of the 3GPP access 12 and RF signal information INF_non-3GPP of the non-3GPP access 14, and convert the RF signal information INF_3GPP of the 3GPP access 12 and the RF signal information INF_non-3GPP of the non-3GPP access 14 into feature metrics FM of the 3GPP access 12 and the non-3GPP access 14. The environment classification circuit 204 is arranged to classify environments of the 3GPP access 12 and the non-3GPP access 14 according to the feature metrics FM of the 3GPP access 12 and the non-3GPP access 14. The action circuit 206 arranged to obtain the predicted performance P_3GPP of the 3GPP access 12 and the predicted performance P_non-3GPP of the non-3GPP access 14 according to a classification result CR of the environments of the 3GPP access 12 and the non-3GPP access 14. At least one of the RF feature extraction circuit 202 and the environment classification circuit 204 may employ a neural-network (NN) model. For example, the RF feature extraction circuit 202 employs an NN model 208 for RF feature extraction, and/or the environment classification circuit 204 employs an NN model 210 for environment classification. In this embodiment, the NN model 208 may be a pre-trained NN model (i.e., an NN model with pre-trained parameters), and the NN model 210 may be an adaptive machine-learning model (i.e., an NN model with parameters trained by adaptive learning). Furthermore, the environment classification circuit 204 may provide feedbacks FB to the RF feature extraction circuit 202 for adaption to environmental changes. For example, the RF feature extraction circuit 202 may adjust pre-trained parameters of the NN model 210 in response to the feedbacks FB provided from the environment classification circuit 204. However, this is for illustrative purposes only, and is not meant to be a limitation of the present invention.

Each of the predicted performance P_3GGP of the 3GPP access 12 and the predicted performance P_non-3GPP of the non-3GPP access 14 may include information needed by the UE 100 to decide how to distribute traffic over 3GPP access 12 and non-3GPP access 14. For example, each of the predicted performance P_3GGP of the 3GPP access 12 and the predicted performance P_non-3GPP of the non-3GPP access 14 may include predicted availability (which indicates if an access will be available in a future network environment), predicted round-trip time (RTT) (which indicates the RTT of an access in a future network environment), and/or predicted congestion (which indicates if an access will be congested in a future network environment).

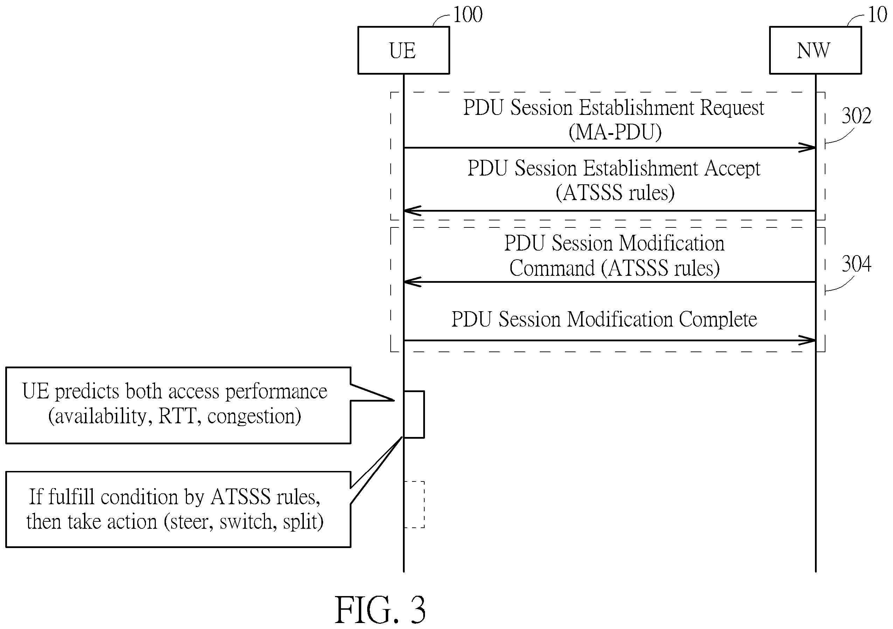

FIG. 3 is a first sequence diagram illustrating interactions between the UE 100 and the NW 10 shown in FIG. 1 according to an embodiment of the present invention. The UE 100 establishes a multi-access protocol data unit (MA-PDU) session by initializing a PDU session establishment procedure 302 with the NW 10 over the 3GPP access 12. For example, the UE 100 sends a PDU Session Establishment Request message to the NW 10, with a "MA-PDU Request" indication indicating to the NW 10 that this PDU Session Establishment Request message is to establish an MA-PDU session and to apply the ATSSS function for steering the traffic of this MA-PDU session. The UE 100 receives a PDU Session Establishment Accept message from the NW 10. The PDU Session Establishment Accept message indicates to the UE 100 that the requested MA-PDU session was successfully established, and it includes the ATSSS rules for the MA-PDU session. The ATSSS rules may be a set of one or more ATSSS rules, each having a precedence value (which identifies the precedence of the ATSSS rule), a traffic descriptor, and an access selection descriptor (which includes a steering functionality, a steering mode, and steering mode information).

The NW 10 may initiate a PDU session modification procedure 304 by sending a PDU Session Modification Command message to the UE 100. The ATSSS rules provided by the NW 10 are carried in the PDU Session Modification Command message. The UE 100 acknowledges the PDU Session Modification Command message, and sends a PDU Session Modification Complete message to the NW 10.

To put it simply, the UE 100 can receive ATSSS rules during the UE-requested PDU session establishment procedure 302 for an MA-PDU session or the NW-requested PDU session modification procedure 304, and the UE 100 can distribute the traffic across the 3GPP access 12 and the non-3GPP access 14 according to the ATSSS rules.

The UE 100 performs NN-based 3GPP and non-3GPP access performance prediction to obtain the predicted performance P_3GPP of the 3GPP access 12 and the predicted performance P_non-3GPP of the non-3GPP access 14. If a condition of the UE 100 that is evaluated based on the access performance prediction results (P_3GPP and P_non-3GPP) fulfills one of the ATSSS rules 16, the UE 100 can take action (e.g., steer, switch, or split) in advance for better user-experience.

The steering mode of ATSSS for the traffic may be an Active-Standby mode, a Smallest Delay mode, a load-Balancing mode, or a Priority-based mode. When the steering mode is the Active-Standby mode, the UE 100 uses predicted access availability that is obtained from observing the network environment for access selection. That is, the UE 100 can steer the traffic by using the access which is predicted to be available more possibly. Hence, the UE 100 selects the active access if it is predicted to be available, or selects the standby access if the standby access is predicted to be available and the active access is predicted to be unavailable. When the steering mode is the Smallest Delay mode, the UE 100 uses the predicted smallest RTT that is obtained from observing the network environment for access selection. That is, the UE 100 selects the access which is predicted to have the smallest RTT. When the steering mode is the Load-Balancing mode, the UE 100 uses the predicted quality of both predicted available accesses that is obtained from observing the network environment to dynamically adjust the percentage of both predicted available accesses, or sends all traffic to one predicted available access. That is, if both of the accesses are predicted to be available, the UE 100 can distribute the traffic across both 3GPP access 12 and non-3GPP access 14. If only one access is predicted to be available, the UE steers the traffic by using the available access only. When the steering mode is the Priority-based mode, the UE 100 uses the predicted congestion or unavailability of the high priority access that is obtained from observing the network environment, and then acts in advance. That is, the UE 100 steers the traffic to the high priority access, and predicts if it will become congested or unavailable and then acts in advance.

As mentioned above, the access performance prediction circuit 102 predicts performance of the 3GPP access 12 and performance of the non-3GPP access 14, and the wireless communication circuit 104 takes action (e.g., steer, switch, split) in response to predicted performance P_3GPP of the 3GPP access 12 and predicted performance P_non-3GPP of the non-3GPP access 14. In some embodiments, the wireless communication circuit 104 may take further action (e.g., report) in response to predicted performance P_3GPP of the 3GPP access 12 and predicted performance P_non-3GPP of the non-3GPP access 14. For example, the wireless communication circuit 104 reports the predicted performance P_3GPP of the 3GPP access 12 and the predicted performance P_non-3GPP of the non-3GPP access 14 to the NW 10 for use of ATSSS rule modification.

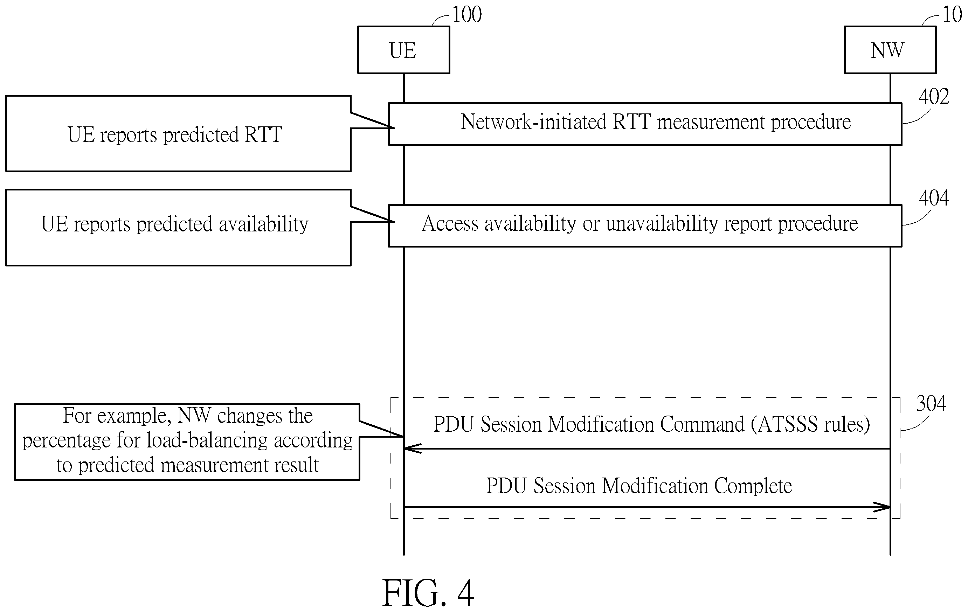

FIG. 4 is a second sequence diagram illustrating interactions between the UE 100 and the NW 10 shown in FIG. 1 according to an embodiment of the present invention. The NW 10 may initiate an RTT measurement procedure 402 by sending one or more performance measurement function protocol (PMFP) ECHO REQUEST messages over the access of the MA-PDU session. Upon reception of the PMFP ECHO REQUEST message, the UE 100 creates a PMFP ECHO RESPONSE message, and sends the PMFP ECHO RESPONSE message over the access of the MA-PDU session via which the PMFP ECHO REQUEST message was received. The UE 100 performs NN-based 3GPP and non-3GPP access performance prediction to obtain the predicted performance P_3GPP of the 3GPP access 12 and the predicted performance P_non-3GPP of the non-3GPP access 14. Each of the predicted performance P_3GPP of the 3GPP access 12 and the predicted performance P_non-3GPP of the non-3GPP access 14 may include predicted availability, predicted RTT, etc. During the RTT measurement procedure 402, the UE 100 reports the predicted RTT of each access to the NW 10, for example, via the PMFP ECHO RESPONSE message.

The UE 100 may inform the NW 10 about availability or unavailability of an access of an MA-PDU session. For example, the UE 100 may initiate an access availability or unavailability report procedure 404 by creating a PMFP ACCESS REPORT message and sending the PMFP ACCESS REPORT message to the NW 10. During the access availability or unavailability report procedure 404, the UE 100 reports the predicted availability of each access to the NW 10, for example, via the PMFP ACCESS REPORT message. Upon reception of the PMFP ACCESS REPORT message, the NW 10 creates a PMFP ACKNOWLEDGEMENT message, and sends the PMFP ACKNOWLEDGEMENT message over the access of the MA-PDU session via which the PMFP ACCESS REPORT message was received. After being informed of the access performance prediction result (e.g., predicted measurement result including predicted availability, predicted RTT, etc.) obtained by the UE 100, the NW 10 may decide to adjust the ATSSS rules 16 through the PDU session modification procedure 304. The ATSSS rules adjusted by the NW 10 are carried in the PDU Session Modification Command message sent from the NW 10 to the UE 100. For example, the NW 10 may change the percentage for load-balancing according to the predicted measurement result.

As mentioned above, the UE 100 performs NN-based 3GPP and non-3GPP access performance prediction to obtain the predicted performance P_3GPP of the 3GPP access 12 and the predicted performance P_non-3GPP of the non-3GPP access 14. The NN model employed by the UE 100 is defined by NN parameters (e.g., weights). In some embodiments, the NN parameters may be provided by the NW 10 to assist the UE 100 on the NN-based access performance prediction. In this way, better prediction can be achieved by the NN parameters communicated between UE 100 and NW 10. Hence, the wireless communication circuit 104 is arranged to receive NN parameters PR_NN transmitted from the NW 10, and the access performance prediction circuit 102 is arranged to use an NN model indicated by the NN parameters PR_NN to obtain the predicted performance P_3GPP of the 3GPP access 12 and the predicted performance P_non-3GPP of the non-3GPP access 14.

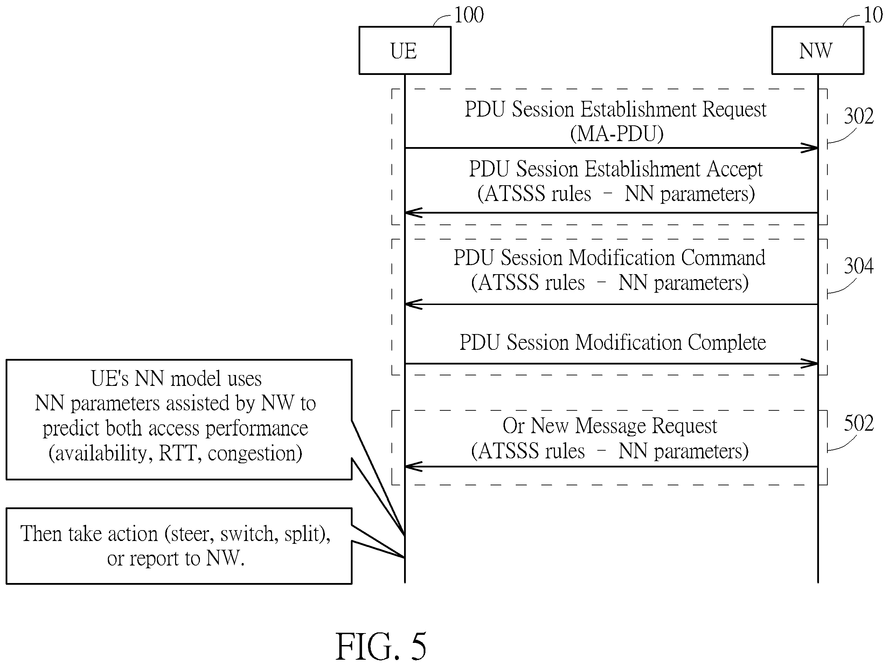

FIG. 5 is a third sequence diagram illustrating interactions between the UE 100 and the NW 10 shown in FIG. 1 according to an embodiment of the present invention. For example, the PDU session establishment procedure 302 may be modified to have the NN parameters PR_NN carried by a modified PDU Session Establishment Accept message that is sent from the NW 10 to the UE 100. For another example, the PDU session modification procedure 304 may be modified to have the NN parameters PR_NN carried by a modified PDU Session Modification Command message that is sent from the NW 10 to the UE 100. For yet another example, a new PDU session procedure 502 may be proposed for sending the NN parameters PR_NN via a new Message Request. The UE 100 can use an NN model indicated by the NN parameters PR_NN assisted by the NW 10 to perform the access performance prediction upon both of the 3GPP access 12 and the non-3GPP access 14.

## Claims

1. A user equipment, in the following also referred to as UE, (100) comprising:
an access performance prediction circuit (102), arranged to predict performance of a 3rd generation partnership project, in the following also referred to as 3GPP, access and performance of a non-3GPP access; and
a wireless communication circuit (104), arranged to take action in response to predicted performance of the 3GPP access and predicted performance of the non-3GPP access;
wherein the access performance prediction circuit (102) comprises:
a radio-frequency, in the following also referred to as RF, feature extraction circuit (202), arranged to receive RF signal information of the 3GPP access and RF signal information of the non-3GPP access, and convert the RF signal information of the 3GPP access and the RF signal information of the non-3GPP access into feature metrics of the 3GPP access and the non-3GPP access;
an environment classification circuit (204), arranged to classify network environments of the 3GPP access and the non-3GPP access according to the feature metrics of the 3GPP access and the non-3GPP access; and
an action circuit (206), arranged to obtain the predicted performance of the 3GPP access and the predicted performance of the non-3GPP access according to a classification result of the network environments of the 3GPP access and the non-3GPP access;
wherein at least one of the RF feature extraction circuit (202) and the environment classification circuit (204) is adapted to employ a neural-network, in the following also referred to as NN, model;
wherein the wireless communication circuit (104) is adapted to refer to the predicted performance of the 3GPP access and the predicted performance of the non-3GPP access to deal with traffic steering across the 3GPP access and the non-3GPP access under a steering mode of access traffic steering, switching and splitting, in the following also referred to as ATSSS; and/or the wireless communication circuit (104) is adapted to report the predicted performance of the 3GPP access and the predicted performance of the non-3GPP access to a network for use of ATSSS rule modification.

2. The UE of claim 1, wherein the environment classification circuit (204) is adapted to employ adaptive machine learning; and/or
wherein the RF feature extraction circuit (202) is adapted to employ a pre-trained NN model,
wherein preferably the environment classification circuit (204) is further arranged to provide feedbacks to the RF feature extraction circuit (202) for adaption to environmental changes.

3. The UE of any one of claims 1 to 2, wherein the wireless communication circuit (104) is further arranged to receive NN parameters transmitted from the network, and the access performance prediction circuit (102) is adapted to use the NN model indicated by the NN parameters to obtain the predicted performance of the 3GPP access and the predicted performance of the non-3GPP access.

4. The UE of any one of claims 1 to 3, wherein each of the predicted performance of the 3GPP access and the predicted performance of the non-3GPP access comprises at least one of predicted availability, predicted round-trip time, in the following also referred to as RTT, and predicted congestion.

5. A wireless communication method performed by a user equipment, comprising:
performing access performance prediction for predicting performance of a 3rd generation partnership project, in the following also referred to as 3GPP, access and performance of a non-3GPP access; and
taking action in response to predicted performance of the 3GPP access and predicted performance of the non-3GPP access;
wherein performing the access performance prediction for predicting performance of the 3GPP access and performance of the non-3GPP access comprises:
performing radio-frequency, in the following also referred to as RF, feature extraction for converting RF signal information of the 3GPP access and RF signal information of the non-3GPP access into feature metrics of the 3GPP access and the non-3GPP access;
performing environment classification for classifying network environments of the 3GPP access and the non-3GPP access according to the feature metrics of the 3GPP access and the non-3GPP access; and
obtaining the predicted performance of the 3GPP access and the predicted performance of the non-3GPP access according to a classification result of the network environments of the 3GPP access and the non-3GPP access;
wherein at least one of the RF feature extraction and the environment classification employs a neural-network, in the following also referred to as NN, model;
wherein taking action in response to the predicted performance of the 3GPP access and the predicted performance of the non-3GPP access comprises:
referring to the predicted performance of the 3GPP access and the predicted performance of the non-3GPP access to deal with traffic steering across the 3GPP access and the non-3GPP access under a steering mode of access traffic steering, switching and splitting, in the following also referred to as ATSSS; and/or
reporting the predicted performance of the 3GPP access and the predicted performance of the non-3GPP access to a network for use of ATSSS rule modification.

6. The wireless communication method of claim 5, wherein the environment classification employs adaptive machine learning; and/or
wherein the RF feature extraction employs a pre-trained NN model,
wherein preferably the environment classification is further arranged to provide feedbacks to the RF feature extraction for adaption to environmental changes.

7. The wireless communication method of any one of claims 5 to 6, further comprising:
receiving NN parameters transmitted from the network; and
wherein performing the access performance prediction for predicting performance of the 3GPP access and performance of the non-3GPP access comprises:
using the NN model indicated by the NN parameters to obtain the predicted performance of the 3GPP access and the predicted performance of the non-3GPP access.

8. The wireless communication method of any one of claims 5 to 7, wherein each of the predicted performance of the 3GPP access and the predicted performance of the non-3GPP access comprises at least one of predicted availability, predicted round-trip time, in the following also referred to as RTT, and predicted congestion.

## Patentansprüche

1. Benutzergerät, im Folgenden auch als UE bezeichnet, (100), umfassend:
eine Zugriffsleistungsvorhersageschaltung (102), die angeordnet ist, um die Leistung eines 3rd Generation Partnership Project, im Folgenden auch als 3GPP bezeichnet, -Zugriffs und die Leistung eines Nicht-3GPP-Zugriffs vorherzusagen; und
eine Drahtloskommunikationsschaltung (104), die angeordnet ist, um als Reaktion auf die vorhergesagte Leistung des 3GPP-Zugriffs und die vorhergesagte Leistung des Nicht-3GPP-Zugriffs Maßnahmen zu ergreifen;
wobei die Zugriffsleistungsvorhersageschaltung (102) umfasst:
eine Funkfrequenz, im Folgenden auch als RF bezeichnet, -Merkmalsextraktionsschaltung (202), die angeordnet ist, um RF-Signal-Informationen des 3GPP-Zugriffs und RF-Signal-Informationen des Nicht-3GPP-Zugriffs zu empfangen und die RF-Signal-Informationen des 3GPP-Zugriffs und die RF-Signal-Informationen des Nicht-3GPP-Zugriffs in Merkmalsmetriken des 3GPP-Zugriffs und des Nicht-3GPP-Zugriffs umzuwandeln;
eine Umgebungsklassifizierungsschaltung (204), die angeordnet ist, um Netzwerkumgebungen des 3GPP-Zugriffs und des Nicht-3GPP-Zugriffs gemäß den Merkmalsmetriken des 3GPP-Zugriffs und des Nicht-3GPP-Zugriffs zu klassifizieren; und
eine Maßnahmenschaltung (206), die angeordnet ist, um die vorhergesagte Leistung des 3GPP-Zugriffs und die vorhergesagte Leistung des Nicht-3GPP-Zugriffs gemäß einem Klassifizierungsergebnis der Netzwerkumgebungen des 3GPP-Zugriffs und des Nicht-3GPP-Zugriffs zu erhalten;
wobei mindestens eine der RF-Merkmalsextraktionsschaltung (202) und der Umgebungsklassifizierungsschaltung (204) angepasst ist, um ein neuronales Netzwerk, im Folgenden auch als NN bezeichnet, -Modell zu verwenden;
wobei die Drahtloskommunikationsschaltung (104) angepasst ist, um sich auf die vorhergesagte Leistung des 3GPP-Zugriffs und die vorhergesagte Leistung des Nicht-3GPP-Zugriffs zu beziehen, um sich mit der Verkehrssteuerung über den 3GPP-Zugriff und den Nicht-3GPP-Zugriff unter einem Steuerungsmodus der Zugriffsverkehrssteuerung, - umschaltung und -aufteilung, im Folgenden auch als ATSSS bezeichnet, zu befassen; und/oder die Drahtloskommunikationsschaltung (104) angepasst ist, um die vorhergesagte Leistung des 3GPP-Zugriffs und die vorhergesagte Leistung des Nicht-3GPP-Zugriffs an ein Netzwerk zur Verwendung einer ATSSS-Regel-Modifikation zu melden.

2. UE nach Anspruch 1, wobei die Umgebungsklassifizierungsschaltung (204) angepasst ist, um adaptives maschinelles Lernen zu verwenden; und/oder
wobei die RF-Merkmalsextraktionsschaltung (202) angepasst ist, um ein vortrainiertes NN-Modell zu verwenden,
wobei vorzugsweise die Umgebungsklassifizierungsschaltung (204) ferner angeordnet ist, um Rückmeldungen an die RF-Merkmalsextraktionsschaltung (202) zur Anpassung an Umgebungsänderungen bereitzustellen.

3. UE nach einem der Ansprüche 1 bis 2, wobei die Drahtloskommunikationsschaltung (104) ferner angeordnet ist, um von dem Netzwerk übertragene NN-Parameter zu empfangen, und die Zugriffsleistungsvorhersageschaltung (102) angepasst ist, um das durch die NN-Parameter angegebene NN-Modell zu verwenden, um die vorhergesagte Leistung des 3GPP-Zugriffs und die vorhergesagte Leistung des Nicht-3GPP-Zugriffs zu erhalten.

4. UE nach einem der Ansprüche 1 bis 3, wobei jede der vorhergesagten Leistung des 3GPP-Zugriffs und der vorhergesagten Leistung des Nicht-3GPP-Zugriffs mindestens eines von vorhergesagter Verfügbarkeit, vorhergesagter Umlaufzeit, im Folgenden auch als RTT bezeichnet, und vorhergesagter Überlastung umfasst.

5. Drahtloskommunikationsverfahren, das von einem Benutzergerät durchgeführt wird, umfassend:
Durchführen einer Zugriffsleistungsvorhersage zum Vorhersagen der Leistung eines 3rd Generation Partnership Project, im Folgenden auch als 3GPP bezeichnet, -Zugriffs und der Leistung eines Nicht-3GPP-Zugriffs; und
Ergreifen von Maßnahmen als Reaktion auf die vorhergesagte Leistung des 3GPP-Zugriffs und die vorhergesagte Leistung des Nicht-3GPP-Zugriffs;
wobei das Durchführen der Zugriffsleistungsvorhersage zum Vorhersagen der Leistung des 3GPP-Zugriffs und der Leistung des Nicht-3GPP-Zugriffs umfasst:
Durchführen einer Funkfrequenz, im Folgenden auch als RF bezeichnet, - Merkmalsextraktion zum Umwandeln von RF-Signal-Informationen des 3GPP-Zugriffs und RF-Signal-Informationen des Nicht-3GPP-Zugriffs in Merkmalsmetriken des 3GPP-Zugriffs und des Nicht-3GPP-Zugriffs;
Durchführen einer Umgebungsklassifizierung zum Klassifizieren von Netzwerkumgebungen des 3GPP-Zugriffs und des Nicht-3GPP-Zugriffs gemäß den Merkmalsmetriken des 3GPP-Zugriffs und des Nicht-3GPP-Zugriffs; und
Erhalten der vorhergesagten Leistung des 3GPP-Zugriffs und der vorhergesagten Leistung des Nicht-3GPP-Zugriffs gemäß einem Klassifizierungsergebnis der Netzwerkumgebungen des 3GPP-Zugriffs und des Nicht-3GPP-Zugriffs;
wobei mindestens eine der RF-Merkmalsextraktion und der Umgebungsklassifizierung ein neuronales Netzwerk, im Folgenden auch als NN bezeichnet, -Modell verwendet;
wobei das Ergreifen von Maßnahmen als Reaktion auf die vorhergesagte Leistung des 3GPP-Zugriffs und die vorhergesagte Leistung des Nicht-3GPP-Zugriffs umfasst:
Bezugnehmen auf die vorhergesagte Leistung des 3GPP-Zugriffs und die vorhergesagte Leistung des Nicht-3GPP-Zugriffs, um sich mit der Verkehrssteuerung über den 3GPP-Zugriff und den Nicht-3GPP-Zugriff unter einem Steuerungsmodus der Zugriffsverkehrssteuerung, -umschaltung und -aufteilung, im Folgenden auch als ATSSS bezeichnet, zu befassen; und/oder
Melden der vorhergesagten Leistung des 3GPP-Zugriffs und der vorhergesagten Leistung des Nicht-3GPP-Zugriffs an ein Netzwerk zur Verwendung einer ATSSS-Regel-Modifikation.

6. Drahtloskommunikationsverfahren nach Anspruch 5, wobei die Umgebungsklassifizierung adaptives maschinelles Lernen verwendet; und/oder
wobei die RF-Merkmalsextraktion ein vortrainiertes NN-Modell verwendet,
wobei vorzugsweise die Umgebungsklassifizierung ferner angeordnet ist, um Rückmeldungen an die RF-Merkmalsextraktion zur Anpassung an Umgebungsänderungen bereitzustellen.

7. Drahtloskommunikationsverfahren nach einem der Ansprüche 5 bis 6, ferner umfassend:
Empfangen von von dem Netzwerk übertragenen NN-Parametern; und
wobei das Durchführen der Zugriffsleistungsvorhersage zum Vorhersagen der Leistung des 3GPP-Zugriffs und der Leistung des Nicht-3GPP-Zugriffs umfasst:
Verwenden des durch die NN-Parameter angegebenen NN-Modells, um die vorhergesagte Leistung des 3GPP-Zugriffs und die vorhergesagte Leistung des Nicht-3GPP-Zugriffs zu erhalten.

8. Drahtloskommunikationsverfahren nach einem der Ansprüche 5 bis 7, wobei jede der vorhergesagten Leistung des 3GPP-Zugriffs und der vorhergesagten Leistung des Nicht-3GPP-Zugriffs mindestens eines von vorhergesagter Verfügbarkeit, vorhergesagter Umlaufzeit, im Folgenden auch als RTT bezeichnet, und vorhergesagter Überlastung umfasst.

## Revendications

1. Équipement utilisateur, ci-après également appelé UE, (100) comprenant :
un circuit de prédiction de performance d'accès (102), agencé pour prédire la performance d'un accès de projet de partenariat de 3ème génération, ci-après également appelé 3GPP, et la performance d'un accès non 3GPP ; et
un circuit de communication sans fil (104), agencé pour prendre des mesures en réponse à la performance prédite de l'accès 3GPP et à la performance prédite de l'accès non 3GPP ;
dans lequel le circuit de prédiction de performance d'accès (102) comprend :
un circuit d'extraction de caractéristiques radiofréquence, ci-après également appelé RF, (202), agencé pour recevoir des informations de signal RF de l'accès 3GPP et des informations de signal RF de l'accès non 3GPP, et convertir les informations de signal RF de l'accès 3GPP et les informations de signal RF de l'accès non 3GPP en métriques de caractéristiques de l'accès 3GPP et de l'accès non 3GPP ;
un circuit de classification d'environnement (204), agencé pour classer des environnements de réseau de l'accès 3GPP et de l'accès non 3GPP en fonction des métriques de caractéristiques de l'accès 3GPP et de l'accès non 3GPP ; et
un circuit d'action (206), agencé pour obtenir la performance prédite de l'accès 3GPP et la performance prédite de l'accès non 3GPP en fonction d'un résultat de classification des environnements de réseau de l'accès 3GPP et de l'accès non 3GPP ;
dans lequel au moins l'un du circuit d'extraction de caractéristiques RF (202) et du circuit de classification d'environnement (204) est adapté pour employer un modèle de réseau neuronal, ci-après également appelé NN ;
dans lequel le circuit de communication sans fil (104) est adapté pour se référer à la performance prédite de l'accès 3GPP et à la performance prédite de l'accès non 3GPP pour traiter l'orientation de trafic à travers l'accès 3GPP et l'accès non 3GPP dans un mode d'orientation d'orientation, de commutation et de division de trafic d'accès, ci-après également appelé ATSSS; et/ou le circuit de communication sans fil (104) est adapté pour rapporter la performance prédite de l'accès 3GPP et la performance prédite de l'accès non 3GPP à un réseau pour l'utilisation d'une modification de règle ATSSS.

2. UE selon la revendication 1, dans lequel le circuit de classification d'environnement (204) est adapté pour employer un apprentissage automatique adaptatif ; et/ou
dans lequel le circuit d'extraction de caractéristiques RF (202) est adapté pour employer un modèle NN pré-entraîné,
dans lequel de préférence le circuit de classification d'environnement (204) est en outre agencé pour fournir des rétroactions au circuit d'extraction de caractéristiques RF (202) pour l'adaptation à des changements environnementaux.

3. UE selon l'une quelconque des revendications 1 à 2, dans lequel le circuit de communication sans fil (104) est en outre agencé pour recevoir des paramètres NN transmis à partir du réseau, et le circuit de prédiction de performance d'accès (102) est adapté pour utiliser le modèle NN indiqué par les paramètres NN pour obtenir la performance prédite de l'accès 3GPP et la performance prédite de l'accès non 3GPP.

4. UE selon l'une quelconque des revendications 1 à 3, dans lequel chacune de la performance prédite de l'accès 3GPP et de la performance prédite de l'accès non 3GPP comprend au moins l'un d'une disponibilité prédite, d'un temps aller-retour prédit, ci-après également appelé RTT, et d'un encombrement prédit.

5. Procédé de communication sans fil réalisé par un équipement utilisateur, comprenant :
la réalisation d'une prédiction de performance d'accès pour prédire la performance d'un accès de projet de partenariat de 3ème génération, ci-après également appelé 3GPP, et la performance d'un accès non 3GPP ; et
la prise de mesures en réponse à la performance prédite de l'accès 3GPP et à la performance prédite de l'accès non 3GPP ;
dans lequel la réalisation de la prédiction de performance d'accès pour prédire la performance de l'accès 3GPP et la performance de l'accès non 3GPP comprend :
la réalisation d'une extraction de caractéristiques radiofréquence, ci-après également appelée RF, pour convertir des informations de signal RF de l'accès 3GPP et des informations de signal RF de l'accès non 3GPP en métriques de caractéristiques de l'accès 3GPP et de l'accès non 3GPP ;
la réalisation d'une classification d'environnement pour classer des environnements de réseau de l'accès 3GPP et de l'accès non 3GPP en fonction des métriques de caractéristiques de l'accès 3GPP et de l'accès non 3GPP ; et
l'obtention de la performance prédite de l'accès 3GPP et de la performance prédite de l'accès non 3GPP en fonction d'un résultat de classification des environnements de réseau de l'accès 3GPP et de l'accès non 3GPP ;
dans lequel au moins l'une de l'extraction de caractéristiques RF et de la classification d'environnement emploie un modèle de réseau neuronal, ci-après également appelé NN ;
dans lequel la prise de mesures en réponse à la performance prédite de l'accès 3GPP et à la performance prédite de l'accès non 3GPP comprend :
la référence à la performance prédite de l'accès 3GPP et à la performance prédite de l'accès non 3GPP pour traiter l'orientation de trafic à travers l'accès 3GPP et l'accès non 3GPP dans un mode d'orientation d'orientation, de commutation et de division de trafic d'accès, ci-après également appelé ATSSS ; et/ou
le rapport de la performance prédite de l'accès 3GPP et de la performance prédite de l'accès non 3GPP à un réseau pour l'utilisation d'une modification de règle ATSSS.

6. Procédé de communication sans fil selon la revendication 5, dans lequel la classification d'environnement emploie un apprentissage automatique adaptatif ; et/ou
dans lequel l'extraction de caractéristiques RF emploie un modèle NN pré-entraîné,
dans lequel de préférence la classification d'environnement est en outre agencée pour fournir des rétroactions à l'extraction de caractéristiques RF pour l'adaptation à des changements environnementaux.

7. Procédé de communication sans fil selon l'une quelconque des revendications 5 à 6, comprenant en outre :
la réception de paramètres NN transmis à partir du réseau ; et
dans lequel la réalisation de la prédiction de performance d'accès pour prédire la performance de l'accès 3GPP et la performance de l'accès non 3GPP comprend :
l'utilisation du modèle NN indiqué par les paramètres NN pour obtenir la performance prédite de l'accès 3GPP et la performance prédite de l'accès non 3GPP.

8. Procédé de communication sans fil selon l'une quelconque des revendications 5 à 7, dans lequel chacune de la performance prédite de l'accès 3GPP et de la performance prédite de l'accès non 3GPP comprend au moins l'un d'une disponibilité prédite, d'un temps aller-retour prédit, ci-après également appelé RTT, et d'un encombrement prédit.
